(19) Europäisches Patentamt / European Patent Office / Office européen des brevets

(11) **EP 2 308 192 B1**

(12) **FASCICULE DE BREVET EUROPEEN**

(45) Date de publication et mention de la délivrance du brevet:
**14.04.2021 Bulletin 2021/15**

(21) Numéro de dépôt: **09784505.1**

(22) Date de dépôt: **10.07.2009**

(51) Int Cl.:
*H04B 17/391* (2015.01)      *H04B 17/00* (2015.01)
*H04L 1/24* (2006.01)

(86) Numéro de dépôt international:
**PCT/FR2009/051377**

(87) Numéro de publication internationale:
**WO 2010/004226 (14.01.2010 Gazette 2010/02)**

(54) **PROCÉDÉ DE GÉNÉRATION D'UN SCÉNARIO DE BRUITS ÉLECTROMAGNÉTIQUES**

VERFAHREN ZUM ERZEUGEN EINES SZENARIOS VON ELEKTROMAGNETISCHEM RAUSCHEN

METHOD OF GENERATING A SCENARIO OF ELECTROMAGNETIC NOISE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **11.07.2008 FR 0854734**

(43) Date de publication de la demande:
**13.04.2011 Bulletin 2011/15**

(73) Titulaire: **Université Gustave Eiffel**
**77454 Marne-la-Vallée Cedex 2 (FR)**

(72) Inventeurs:
• **DENIAU, Virginie**
  **F-59194 Raches (FR)**
• **BEN SLIMEN, Nedim**
  **F-59650 Villeneuve-d'ascq (FR)**
• **RIOULT, Jean**
  **F-59000 Lille (FR)**

(74) Mandataire: **Cabinet Beau de Loménie**
**51 avenue Jean Jaurès**
**BP 7073**
**69301 Lyon Cedex 07 (FR)**

(56) Documents cités:
WO-A-02/09313      FR-A- 2 877 514
US-A- 5 794 128      US-A1- 2007 127 559

**Description**

La présente invention a pour objet un procédé de génération d'un scénario de bruits électromagnétiques.

Actuellement, pour contrôler la fiabilité d'une communication radioélectrique, on détermine généralement l'amplitude minimale du signal utile en fonction de la couverture du réseau et le rapport « signal sur bruit » minimum pour atteindre la qualité de communication souhaitée. Cela permet de fixer un gabarit de bruit électromagnétique maximum, le gabarit indiquant le niveau de bruit au-dessus duquel la communication est susceptible d'être brouillée.

Cette approche n'est plus applicable avec les nouveaux systèmes de télécommunication numériques, du fait de leur complexité et de l'augmentation des fréquences utilisées. En particulier, lorsqu'un signal de télécommunication rencontre une perturbation, c'est principalement l'impact sur le taux d'erreur binaire (TEB) qui sera déterminant sur le succès ou l'échec de la transmission. Or, l'effet d'une perturbation radioélectrique sur le taux d'erreur binaire n'est pas uniquement lié à l'amplitude de la perturbation mais dépend au contraire principalement de sa durée et de sa répétition.

Ainsi, une perturbation d'amplitude très élevée mais très brève pourra passer inaperçue alors qu'une perturbation durable dans le temps ou une perturbation brève mais répétée à intervalles de temps courts, d'amplitude moindre, dégradera davantage le taux d'erreur binaire et pourra même totalement empêcher l'établissement de la communication.

De plus, dans les hautes fréquences désormais utilisées, les perturbations les plus brèves s'avèrent être les plus pénalisantes. En effet, les phénomènes les plus brefs couvrent une étendue spectrale importante.

En outre, la miniaturisation des composants d'électronique et d'électronique de puissance entraîne des changements d'état de plus en plus rapide, ainsi que l'augmentation du nombre de périodes transitoires et de la sensibilité des équipements par rapport aux perturbations extérieures.

De plus, l'augmentation de la vitesse des véhicules a pour effet l'augmentation des phénomènes mécaniques à l'origine des perturbations, ainsi que l'augmentation des changements de bases à l'origine des perturbations.

Pour toutes ces raisons, les méthodes traditionnelles de vérification ou de gestion de la compatibilité électromagnétique sont de plus en plus inadaptées pour contrôler les communications radio transmises par des systèmes de télécommunication actuels. Les documents US-2007/0127559, US-5.794.128, WO-2002/009313 et FR-2.877.514 décrivent des techniques utiles dans le domaine de la gestion des interférences électromagnétiques dans un équipement.

La présente invention a pour but de proposer un procédé de génération d'un scénario de bruits qui permette de contrôler la fiabilité d'un équipement sensible en évitant les inconvénients précités.

A cet effet, l'invention a pour objet un procédé de génération d'un scénario de bruits électromagnétiques pour le contrôle de la fiabilité d'un équipement sensible selon la revendication 1.

Avantageusement, le procédé comprend une étape consistant à fixer au moins une caractéristique relative à l'étage d'entrée dudit équipement sensible, ladite au moins une caractéristique étant prise en compte pour générer ledit scénario de bruits électromagnétiques.

L'invention a également pour objet un générateur de signal programmé avec un scénario de bruits électromagnétiques selon la revendication 3.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :

- la figure 1 est un schéma fonctionnel montrant les étapes d'un procédé de génération d'un scénario de bruits électromagnétiques selon un mode de réalisation de l'invention ;
- la figure 2 est un schéma fonctionnel montrant des sous-étapes du procédé de la figure 1 permettant la construction d'une base de données ;
- la figure 3 est un graphe montrant la durée de mille événements transitoires ;
- la figure 4 est un graphe montrant la densité de probabilité des durées des événements transitoires de la figure 3 ;
- la figure 5 représente une interface graphique permettant à un utilisateur de définir des conditions environnementales ;
- la figure 6 représente une deuxième interface graphique permettant à un utilisateur de définir des conditions environnementales ;
- la figure 7 représente une interface graphique permettant à un utilisateur de définir l'équipement à tester ;
- la figure 8 représente une deuxième interface graphique permettant à un utilisateur de définir l'équipement à tester ;
- la figure 9 est un graphe montrant une courbe représentant, en fonction du temps, l'amplitude d'un bruit permanent élémentaire ;
- la figure 10 est un graphe montrant une courbe représentant, en fonction du temps, l'amplitude d'un bruit transitoire élémentaire ;
- la figure 11 est un graphe montrant deux courbes représentant respectivement, en fonction du temps, deux séquences de bruits permanents ;
- la figure 12 est un graphe montrant deux courbes représentant respectivement, en fonction du temps, deux séquences de bruits transitoires ;

- la figure 13 est un graphe montrant un exemple de scénario de bruits permanents ;
- les figures 14 à 17 sont des graphes montrant respectivement la densité de probabilité de la durée, du temps de montée, de l'intervalle de temps et de l'amplitude des événements transitoires d'un premier scénario de mesures ;
- les figures 18 à 21 sont des graphes similaires aux figures 14 à 17 pour un deuxième scénario de mesures ;
- les figures 22 à 25 sont des graphes similaires aux figures 14 à 17 pour un troisième scénario de mesures ; et
- les figures 26 à 29 sont des graphes similaires aux figures 14 à 17 pour un quatrième scénario de mesures.

L'invention a pour objet un procédé de génération d'un scénario de bruits utilisable pour le contrôle de la fiabilité d'un équipement sensible (non représenté), qui peut être, par exemple, un dispositif électronique, un capteur ou un système de télécommunication. Au sens de l'invention, le terme « bruit » désigne un bruit électromagnétique, et le terme « fiabilité » désigne la fiabilité d'un équipement face à des perturbations électromagnétiques.

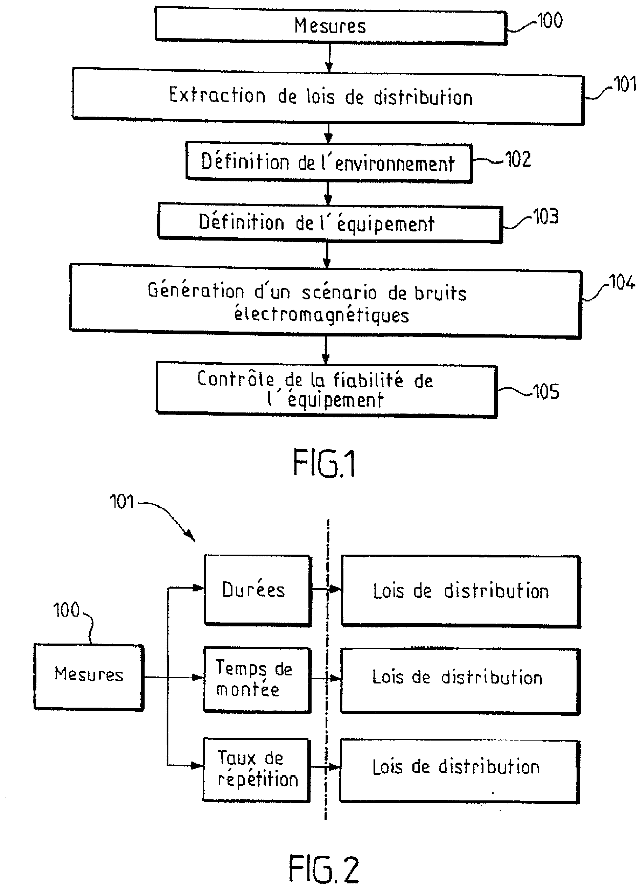

En se référant à la figure 1, les étapes 100 et 101 du procédé sont des étapes préliminaires de construction d'une base de données.

L'étape 100 consiste a effectuer des mesures préalables de bruits électromagnétiques dans des environnements variés et à mémoriser des données relatives à ces mesures.

L'étape 101 consiste à analyser les données mémorisées à l'étape 100 pour en extraire des lois statistiques de distribution des paramètres caractéristiques des bruits électromagnétiques.

La figure 2 montre les sous-étapes de l'analyse de données de l'étape 101.

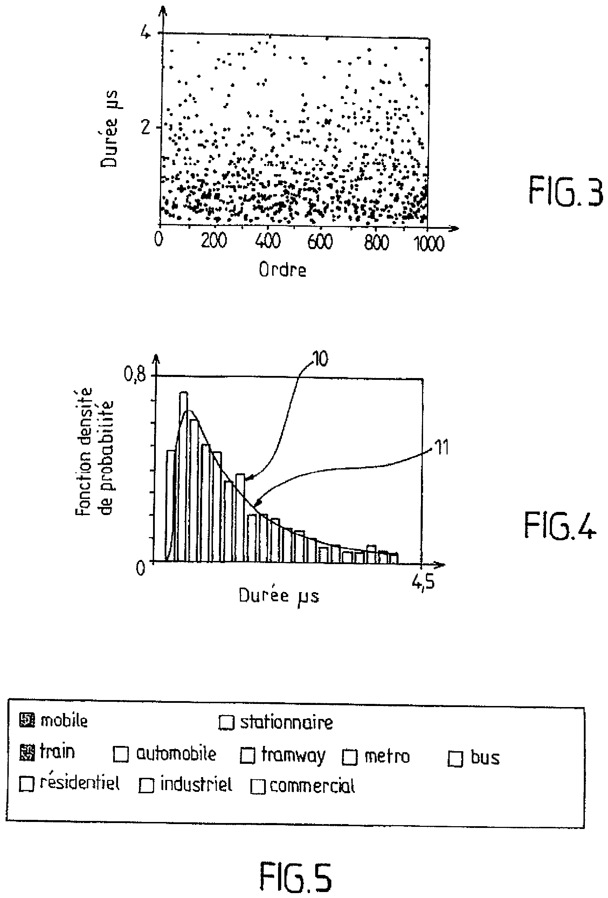

Dans un premier temps, le procédé étudie les durées, les temps de montée, et le taux de répétition des bruits électromagnétiques mémorisés. La figure 3 montre, à titre d'exemple, un graphe représentant la durée de mille événements transitoires. Le temps de montée et le taux de répétition des événements sont étudiés de manière similaire.

Ensuite, le procédé détermine des lois de distribution (et leurs paramètres) des durées, des temps de montée et du taux de répétition, en fonction des conditions de mesures (vitesse, type d'électrification, par exemple).

Pour cela, le procédé détermine la loi statistique qui se rapproche le plus de la distribution de chaque caractéristique temporelle des événements transitoires. La densité de probabilité des durées des événements transitoires de la figure 3 est représentée sur la figure 4. Sur cette figure, le graphe à barres 10 représente la distribution expérimentale et la courbe 11 représente la densité de probabilité empirique estimée à partir de la distribution expérimentale. La courbe 11 représente la fonction densité de probabilité de la loi Lognormale qui s'écrit comme suit :

$$f(D \big/ \mu, \sigma) = \frac{1}{D\sigma\sqrt{2\Pi}} \exp\left(-\frac{(\ln(D)-\mu)^2}{2\sigma^2}\right)$$

Avec D la durée des événements collectés, $\mu$ la moyenne de la loi et $\sigma$ l'écart type de la loi. Les paramètres $\mu$ et $\sigma$ sont déterminés à l'aide de la méthode de maximum de vraisemblance permettant de réduire l'écart entre la fonction densité de probabilité estimée et expérimentale. Par exemple $\mu$ =-0.17 et $\sigma$ = 0.84.

Les temps de montée et le taux de répétition des événements transitoires sont traités de manière similaire.

Le procédé mémorise les lois statistiques de distribution dans une base de données qui sera par la suite utilisée pour déterminer un scénario de bruits.

L'étape 102 du procédé consiste à définir des conditions électromagnétiques environnementales relatives à l'environnement de l'équipement sensible, par exemple le type de moyen de transport (train, voiture, ou autre) dans lequel l'équipement sensible est embarqué, ou le type d'installation (bâtiment industriel ou résidentiel) dans lequel il est disposé.

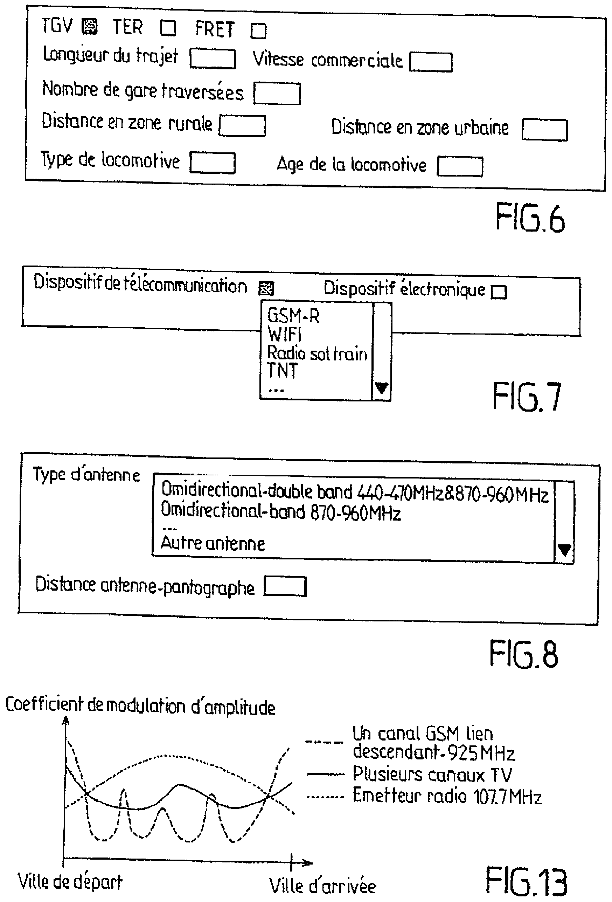

La figure 5 représente un exemple d'interface graphique permettant à un utilisateur de définir les conditions environnementales. L'utilisateur sélectionne sur l'interface graphique une ou plusieurs case(s) caractérisant l'environnement. Par exemple, lorsque l'utilisateur sélectionne les cases « mobile » et « train », une deuxième interface graphique (figure 6), dépendant de la ou des case(s) sélectionnée(s), apparaît sur l'écran pour permettre une définition plus précise de l'environnement. Dans l'exemple, l'utilisateur précise qu'il s'agit d'un TGV.

En variante, une troisième interface graphique peut alors s'afficher sur l'écran pour permettre à l'utilisateur de choisir parmi une liste de lignes à partir des villes de départ et d'arrivée. Ainsi, les différentes informations relatives à la ligne telles que le nombre de gares traversées, les sections neutres, le type d'électrification, l'âge ou l'état de la ligne, les distances parcourues en zone rurale et urbaine peuvent être préalablement renseignées.

De manière générale, le nombre d'interfaces graphiques affichées successivement dépend de la précision souhaitée pour la définition de l'environnement.

L'étape 103 du procédé consiste à déterminer un positionnement de l'équipement sensible, notamment la position des antennes et des récepteurs de l'équipement sensible dans le véhicule ou le bâtiment ou autre.

La figure 7 représente une interface graphique permettant à un utilisateur de fournir des informations sur l'équipement. Le choix du système de télécommunication permet de déterminer automatiquement les fréquences sensibles, la topologie complète du système à bord du train et les positions des antennes (par exemple sur le toit, sous le train, en voiture voyageur, en locomotive, ou autre). Il permet également de proposer une liste du type d'antennes pertinentes (figure 8).

L'étape 104 du procédé consiste, à partir des conditions électromagnétiques environnementales et du positionnement de l'équipement sensible déterminés aux étapes précédentes, à générer un scénario de bruits. Pour cela, le procédé utilise la base de données construite et mémorisée à l'étape 101.

La base de données permet d'identifier des bruits permanents élémentaires et des bruits transitoires élémentaires.

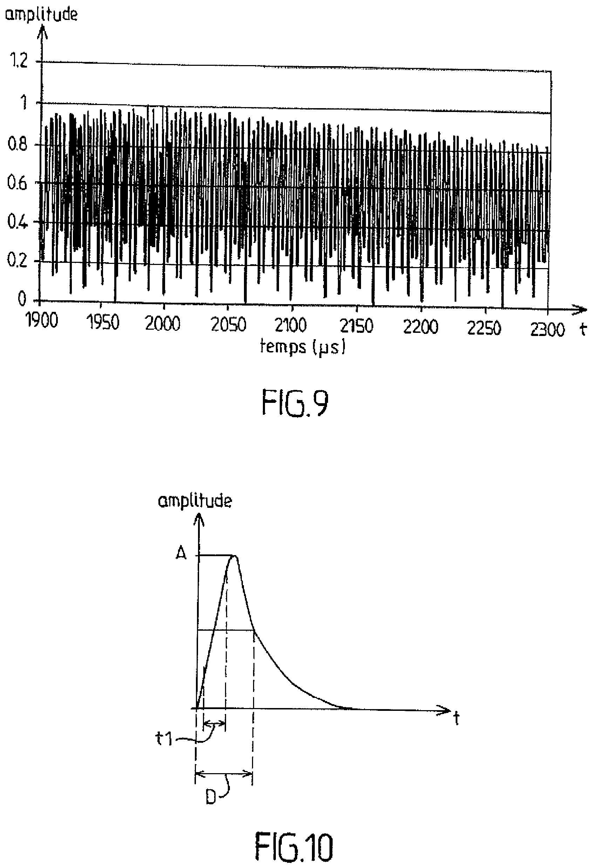

La figure 9 montre une sinusoïde modulée en amplitude, qui définit un bruit permanent élémentaire. La modulation en amplitude permet de simuler soit l'éloignement ou le rapprochement de la source, soit une variation de la puissance émise par la source de bruit.

La figure 10 montre un bruit transitoire élémentaire, qui est défini par un temps de montée t1, une durée D et une amplitude A.

Le procédé extrait ainsi un scénario de bruits permanents et un scénario de bruits transitoires.

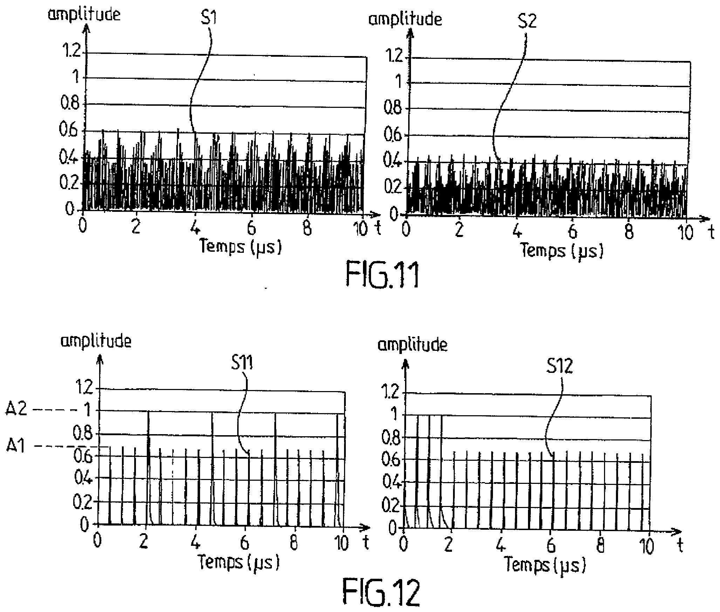

Le scénario de bruits permanents représente les bruits qui sont émis par des sources qui émettent continuellement ou avec une périodicité connue et constante, par exemple des émetteurs de radiodiffusion ou des alimentations en fonctionnement permanent. L'amplitude du bruit permanent peut varier légèrement au cours du temps, notamment pour simuler le fait que l'on s'éloigne ou que l'on se rapproche d'un émetteur. On notera que les bruits permanents possèdent généralement des fréquences connues et fixes. Le scénario de bruits permanents est constitué par un ensemble de séquences de bruits permanents, qui se suivent de manière aléatoire sur une durée totale fixée par l'utilisateur du générateur de bruit. La figure 11 représente, à titre d'exemple, deux séquences S1 et S2 de bruits permanents.

La figure 13 montre un exemple de scénario de bruits permanents. Ce scénario comprend une porteuse GSM avec une modulation de l'amplitude qui simule la variation de distance de l'émetteur, une modulation de l'amplitude sur les canaux TV (on considère que les émetteurs des différents canaux sont placés aux mêmes endroits, ainsi la modulation de l'amplitude qui simule la variation de distance entre l'équipement embarqué et les émetteurs est la même pour tous les canaux) et une modulation de l'amplitude pour un émetteur FM. Le scénario de bruits permanents est la somme de ces différents signaux sinusoïdaux modulés en amplitude.

Le scénario de bruits transitoires représente les bruits émis suite à des variations subites de courant ou de tension. On constate ce type de bruit avec des hacheurs, certains moteurs, des actionneurs, des switches, des pertes de contact caténaire-pantographe ou des disjoncteurs, par exemple. Les bruits transitoires couvrent généralement de larges bandes de fréquences, qui dépendent de la rapidité du front montant du bruit transitoire (temps de montée t1). Le temps de montée t1 est caractéristique du dispositif qui est à l'origine du bruit (moteur, actionneur, ou autre) et donc la bande de fréquences couverte également. D'autre part, les bruits transitoires sont généralement répétés. Par exemple, lorsque l'on met des essuie-glaces en marche, on peut constater un bruit transitoire provoqué par le moteur d'essuie-glace à chaque battement d'essuie-glace. On constatera alors un bruit transitoire avec une fréquence de répétition qui dépend de la vitesse des essuie-glaces. Le scénario de bruits transitoires est constitué par un ensemble de séquences de bruits transitoires, qui se suivent de manière aléatoire sur une durée totale fixée par l'utilisateur du générateur de bruit. La figure 12 représente, à titre d'exemple, deux séquences S11 et S12 de bruits transitoires.

La séquence S11 est constituée par la superposition d'un premier signal, correspondant à une perturbation transitoire qui apparaît fréquemment, et d'un deuxième signal, correspondant à une perturbation transitoire peu fréquente. Cela se caractérise par des pics d'une première amplitude A1 apparaissant à une première fréquence f1 et des pics d'une deuxième amplitude A2, avec A2>A1, apparaissant à une deuxième fréquence f2, avec f2<f1.

La séquence S12 est constituée par des pics apparaissant à la fréquence f1, les trois premiers pics présentant une amplitude A2 supérieure à l'amplitude A1 des pics suivants. Ce changement d'amplitude peut être dû, par exemple, à un éloignement d'une source de bruit transitoire.

A titre d'exemple, dans le cas d'un équipement embarqué dans un train, les perturbations comprennent des perturbations transitoires qui apparaissent fréquemment lors des conditions de circulation régulières du train, des perturbations transitoires peu fréquentes qui se produisent dans des conditions particulières, par exemple aux passage sous section neutre, et des perturbations permanentes qui proviennent des émetteurs de radiotéléphonie, de télévision, de radiodiffusion, ou autre, situés le long des voies.

Le procédé génère ainsi un scénario de bruits en superposant plusieurs bruits permanents et transitoires. Cela permet de fournir des scénarios de perturbations typiques de certains environnements ou contextes, par exemple bureaux équipés de dispositifs Wi-Fi, milieu industriel, milieu résidentiel, moyen de transports, base aérienne, ou autre. Un scénario de bruit peut contenir à la fois des perturbations permanentes volontaires ou non et des perturbations transitoires. Les perturbations transitoires peuvent correspondre à des double exponentielles simples ou modulées par une sinusoïde centrée sur une fréquence correspondant à la bande de fréquence de fonctionnement du système qu'on veut tester, notamment dans le cas d'un système de communication. Les caractéristiques temporelles des doubles exponentielles et leur amplitude ont des distributions qui suivent des lois statistiques déterminées préalablement à l'issue de campagnes de mesures.

Le scénario de bruits est ensuite utilisé pour programmer un générateur de signal, ce qui permet notamment de tester un équipement, par exemple un système de télécommunication (étape 105). Le système de télécommunications peut être testé à deux niveaux.

Un premier niveau consiste à soumettre les équipements physiques (les émetteurs et les récepteurs) du système de télécommunication à des perturbations électromagnétiques et à vérifier que « l'électronique » supporte cette agression EM.

Un deuxième niveau consiste à établir une communication entre un émetteur et un récepteur du système de communication et à vérifier que l'information est correctement comprise par le récepteur en présence des perturbations électromagnétiques. Dans ce second cas, on teste non seulement l'effet des perturbations sur les équipements et sur le signal utile mais également sur le protocole de télécommunication dans le cas des systèmes modernes. En effet, les nouveaux systèmes de télécommunication emploient des protocoles relativement complexes, qui peuvent être très divers et mettre en jeu des redondances d'information afin de pallier certains types d'erreur de transmission. Les éléments qui peuvent varier sont le type de modulation, les fréquences, le nombre de canaux, le temps d'utilisation du canal, le nombre d'utilisateurs possible sur un canal de fréquences, la possibilité de changer ou non de canal si le canal est trop bruité, la possibilité de répéter l'envoi des données si il n'y a pas eu de confirmation de réception. Ainsi selon leur protocole, certains systèmes peuvent être plus sensibles à des perturbations permanentes sur certaines fréquences ou plus sensibles à des perturbations transitoires répétées.

On notera qu'avec les systèmes de test connus, on teste uniquement l'effet de perturbations permanentes sur un canal à la fois. Or, dans le cas des systèmes de télécommunication récents, lorsque l'on génère des perturbations transitoires, on couvre plusieurs canaux de fréquences simultanément. Ainsi, même si le protocole permet de changer de canal, on ne s'affranchit pas des perturbations. Dans ce cas, c'est la fréquence de répétition de la perturbation transitoire qui sera probablement déterminante sur la qualité de réception de la communication.

Ainsi, en générant des scénarios comportant à la fois des bruits permanents et transitoires, on peut mettre en oeuvre des essais pertinents face à tout type de protocole.

On notera que les générateurs de bruit connus sont des générateurs de bruit blanc, c'est-à-dire qu'ils produisent un bruit qui couvre uniformément une large bande de fréquences. La bande de fréquences couverte est généralement un paramètre invariant qui caractérise le type d'équipement. Au contraire, le procédé selon l'invention permet de générer un bruit variable dans le temps, ce qui permet de prendre en compte les paramètres qui définissent les systèmes de télécommunication actuels, notamment les paramètres liés au protocole de télécommunication (fréquences, nombre de canaux, handover, répétition et durée des messages binaires) et les paramètres qui caractérisent les perturbations (amplitude, fréquences, durée, répétition). En d'autres termes, le procédé selon l'invention permet de simuler des conditions plus réalistes.

Le scénario de bruits peut également être employé afin d'établir des procédures d'essais de compatibilité électromagnétique en laboratoire représentatives des circonstances que rencontrera l'équipement sensible dans son utilisation courante.

Dans un mode de réalisation de l'invention, le procédé comprend une étape supplémentaire dans laquelle un utilisateur fixe des paramètres, par exemple la longueur et la durée du trajet, la vitesse maximale, le type d'électrification de la ligne, l'âge ou l'état de la caténaire, l'existence de sections neutres et le type de zone (rurale ou urbaine). Ces paramètres sont ensuite pris en compte par le procédé pour déterminer les chances d'apparition des perturbations et les amplitudes atteintes.

Il est également possible de fixer des caractéristiques relatives à l'étage d'entrée du système (réponse de l'antenne de réception, filtre) de façon à corriger les perturbations pour offrir un scénario de perturbations représentatif de ce que reçoit réellement le système de télécommunication.

On va maintenant décrire plus en détails, à titre d'exemple, le cas des bruits transitoires reçus par une antenne située sur un train.

Pour chaque paramètre temporel et d'amplitude, les lois restent les mêmes (loi log normale par exemple). En revanche, les paramètres des lois statistiques changent en fonction des deux points suivants :

- L'endroit de fixation de l'antenne d'émission / réception du système qu'on veut protéger (distance entre pantographe et antenne GSM-R). Le changement de la position de l'antenne a principalement un impact sur les paramètres de la loi qui contrôle les amplitudes des bruits transitoires. En plus, même pour une position constante de l'antenne d'émission / réception du système, on peut choisir de changer les paramètres de la loi qui contrôle les amplitudes des transitoires afin de les faire varier et tester ainsi l'immunité du système face à des conditions de bruits EM transitoires d'amplitudes plus élevées, par exemple lors de la présence de conditions météorologiques sévères (humidité importante, givre sur la caténaire, ou autre).

- Les conditions d'opération dans lesquelles le système à protéger évolue (vitesse, électrification, âge de la caténaire, ou autre). Le changement des conditions d'opération a principalement un impact sur les paramètres de la loi qui contrôle les intervalles de temps qui séparent deux événements transitoires. Généralement, les conditions d'opérations n'ont pas d'impact sur les caractéristiques statistiques des temps de montées, des durées ou de l'amplitude des perturbations EM transitoires.

A partir de ces analyses et en faisant l'hypothèse d'un régime linéaire local, des nouveaux scénarios de bruits, qui n'ont pas nécessairement été mesurés préalablement, peuvent être composés. En effet, le procédé peut par exemple utiliser une loi qui régit la distribution des amplitudes pour une antenne placé à 5 m du pantographe et une loi qui régit les intervalles de temps à une vitesse de 250 km/h du train, sans que cette situation n'ait été mise en œuvre et mesurée précédemment.

Pour illustrer ce cas, quatre scénarios de mesures sont décrits ci-dessous.

Un premier scénario correspond à une vitesse de croisière à 100 km/h et une antenne GSM-R fixée à 1 mètre du pantographe.

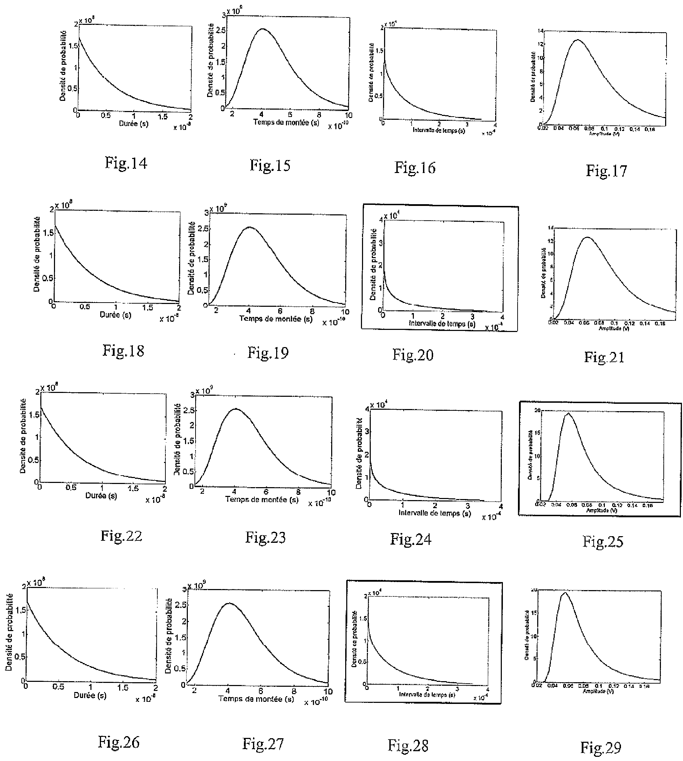

Les caractéristiques temporelles et d'amplitude des événements transitoires qui composent le scénario de bruits généré suivent des lois statistiques prédéfinies, dont les fonctions densités de probabilité sont représentées sur les figures 14 à 17.

En se référant aux figures 18 à 21, un deuxième scénario correspond à une vitesse de croisière à 300 km/h et une antenne GSM-R fixée à 1 mètre du pantographe.

A position constante de l'antenne et avec les mêmes conditions d'opérations du train, la durée, le temps de montée et l'amplitude des événements transitoires conservent les mêmes distributions. Par contre, l'augmentation de la vitesse du train introduit un changement sur l'occurrence des événements transitoires. Ceci impacte la loi statistique des intervalles de temps qui séparent deux événements transitoires (figure 20). Pour générer un nouveau scénario de bruits transitoires, il faut donc adapter les paramètres statistiques de la loi qui contrôle les intervalles de temps.

En se référant aux figures 22 à 25, un troisième scénario correspond à une vitesse de croisière à 300 km/h et une antenne GSM-R fixée à 3 mètre du pantographe.

En fixant l'antenne GSM-R à 3 mètres du pantographe et en maintenant la vitesse du train à 300 km/h, seuls les paramètres de la loi statistique qui contrôle les amplitudes des événements transitoires changent par rapport aux conditions du deuxième scénario (figure 25).

Le déplacement de la position de l'antenne de 1 mètre à 3 mètres fait augmenter la densité des événements transitoires de faibles amplitudes et fait baisser la densité des événements transitoires à forte amplitude.

En se référant aux figures 26 à 29, un quatrième scénario correspond à une vitesse de croisière à 100 km/h et une antenne GSM-R fixée à 3 mètres du pantographe.

La diminution de la vitesse du train de 300 km/h à 100 km/h implique une réduction de la récurrence des événements transitoires par rapport au troisième scénario, donc une diminution de la densité des intervalles de temps courts et une augmentation de la densité des intervalles de temps les plus élevés (figure 28).

Pour générer des scénarios de bruit, le procédé détermine donc les lois des durées et des temps de montée qui restent stables dans les cas présentés. Néanmoins, dans un cas où on s'intéresserait à une autre antenne de réception située sur le train et possédant différentes bandes passantes, les paramètres des lois des temps de montée et des durées pourraient être ajustés afin de prendre en compte les caractéristiques de cette seconde antenne.

Le procédé sélectionne :

- une loi pour les intervalles de temps qui dépendent de la vitesse à laquelle le système doit fonctionner, cette loi pouvant correspondre à une loi établie à partir de la mesure ou une loi extrapolée à partir d'autres cas. Par exemple, le procédé peut extrapoler une loi à 200 km/h si il a accès à des données relatives à des lois mesurées à 100 km/h et 300 km/h.
- une loi pour les amplitudes qui dépendent de la position à laquelle l'antenne sera placée. Comme précédemment, le procédé peut extrapoler certaines lois.

A partir de ces lois, le procédé génère un tableau dans lequel figurent des valeurs successives correspondant à des temps de montée, à des durées, à des intervalles de temps et à des amplitudes. Les bruits transitoires qui se succèdent dans le scénario sont définis par les valeurs présentes dans chacune des colonnes. Le nombre de colonnes du tableau dépend de la durée du scénario que l'on souhaite mettre en œuvre.

**Revendications**

1. Procédé de génération d'un scénario de bruits électromagnétiques pour le contrôle de la fiabilité d'un équipement sensible, comprenant les étapes consistant à :

    - définir (102) des conditions électromagnétiques environnementales relatives à l'environnement de l'équipement sensible, et
    - générer, à partir desdites conditions électromagnétiques environnementales, un scénario de bruits électromagnétiques comprenant un ensemble de bruits transitoires,

    **caractérisé en ce que** ledit environnement est un train et **en ce que** le procédé comporte des étapes consistant à :

    - effectuer des mesures préalables de bruits électromagnétiques dans des environnements variés et mémoriser des données relatives à ces mesures,

- analyser les durées, les temps de montée, et le taux de répétition des données mémorisées à l'étape précédente pour en extraire des lois statistiques de distribution des paramètres caractéristiques des bruits électromagnétiques, Z en fonction des conditions de mesure, et mémoriser les lois statistiques de distribution dans une base de données,

- déterminer (103) un positionnement de l'équipement sensible dans ledit environnement,

- fixer au moins un paramètre parmi la vitesse maximale, le type d'électrification de la ligne, ou l'âge de la caténaire,

- en utilisant la base de données, générer (104) ledit scénario de bruits électromagnétiques à partir aussi dudit positionnement de l'équipement sensible, pour impacter les paramètres de la loi qui contrôle les amplitudes des bruits transitoires, et en prenant en compte ledit au moins un paramètre pour impacter les paramètres de la loi statistique de distribution qui contrôle les intervalles de temps qui séparent deux événements transitoires, ledit scénario de bruits électromagnétiques comprenant aussi un ensemble de bruits permanents,

le procédé étant de plus **caractérisé en ce qu'**il comporte des étapes consistant à programmer un générateur de signal avec ledit scénario de bruits électromagnétiques, et à émettre, à l'aide dudit générateur de signal, un signal correspondant audit scénario de bruits électromagnétiques à destination dudit équipement sensible.

2. Procédé selon la revendication 1, **caractérisé en ce qu'**il comprend une étape consistant à fixer au moins une caractéristique relative à l'étage d'entrée dudit équipement sensible, ladite au moins une caractéristique étant prise en compte pour générer ledit scénario de bruits électromagnétiques.

3. Générateur de signal programmé avec un scénario de bruits électromagnétiques obtenu par l'exécution d'un procédé de génération d'un scénario de bruits électromagnétiques pour le contrôle de la fiabilité d'un équipement sensible, comprenant les étapes consistant à :

   - définir (102) des conditions électromagnétiques environnementales relatives à l'environnement de l'équipement sensible, et
   - générer, à partir desdites conditions électromagnétiques environnementales, un scénario de bruits électromagnétiques comprenant un ensemble de bruits transitoires,

**caractérisé en ce que** ledit environnement est un train et **en ce que** le procédé comporte des étapes consistant à :

   - effectuer des mesures préalables de bruits électromagnétiques dans des environnements variés et mémoriser des données relatives à ces mesures ;
   - analyser les durées, les temps de montée, et le taux de répétition des données mémorisées à l'étape précédente pour en extraire des lois statistiques de distribution des paramètres caractéristiques des bruits électromagnétiques, en fonction des conditions de mesure, et mémoriser les lois statistiques de distribution dans une base de données,
   - déterminer (103) un positionnement de l'équipement sensible dans ledit environnement,
   - fixer au moins un paramètre parmi la vitesse maximale, le type d'électrification de la ligne, ou l'âge de la caténaire,
   - en utilisant la base de données, générer (104) ledit scénario de bruits électromagnétiques à partir aussi dudit positionnement de l'équipement sensible, pour impacter les paramètres de la loi qui contrôle les amplitudes des bruits transitoires, et en prenant en compte ledit au moins un paramètre pour impacter les paramètres de la loi statistique de distribution qui contrôle les intervalles de temps qui séparent deux événements transitoires, ledit scénario de bruits électromagnétiques comprenant aussi un ensemble de bruits permanents ;
   le générateur de signal émettant un signal correspondant audit scénario de bruits électromagnétiques à destination dudit équipement sensible.

4. Générateur de signal selon la revendication 3, **caractérisé en ce qu'**il est programmé avec un scénario de bruits électromagnétiques obtenu par l'exécution d'un procédé de génération d'un scénario de bruits électromagnétiques qui comprend une étape consistant à fixer au moins une caractéristique relative à l'étage d'entrée dudit équipement sensible, ladite au moins une caractéristique étant prise en compte pour générer ledit scénario de bruits électromagnétiques.

**Patentansprüche**

1. Verfahren zur Erzeugung eines Szenarios von elektromagnetischen Störungen für die Überprüfung der Zuverlässigkeit einer empfindlichen Ausrüstung, umfassend die Schritte bestehend aus:

   - Definieren (102) von elektromagnetischen Umgebungsbedingungen, die sich auf eine Umgebung der empfindlichen Ausrüstung beziehen, und

- Erzeugen eines Szenarios von elektromagnetischen Störungen, das eine Menge von vorübergehenden Störungen umfasst, ausgehend von den elektromagnetischen Umgebungsbedingungen,

**dadurch gekennzeichnet, dass** die Umgebung ein Zug ist und dass das Verfahren die Schritte beinhaltet, die bestehen aus:

- Durchführen von vorläufigen Messungen von elektromagnetischen Störungen in variierenden Umgebungen und Speichern von Daten, die sich auf diese Messungen beziehen,
- Analysieren der Dauern, der Anstiegszeiten und der Wiederholraten der in dem vorhergehenden Schritt gespeicherten Daten, um daraus statistische Gesetze der Verteilung von kennzeichnenden Parametern der elektromagnetischen Störungen zu extrahieren, in Abhängigkeit von den Messbedingungen, und Speichern der statistischen Gesetze der Verteilung in einer Datenbank,
- Bestimmen (103) einer Positionierung der empfindlichen Ausrüstung in der Umgebung,
- Festlegen zumindest eines Parameters aus der maximalen Geschwindigkeit, dem Typ der Elektrifizierung der Linie oder dem Alter der Oberleitung,
- Erzeugen (104) des Szenarios von elektromagnetischen Störungen unter Verwendung der Datenbank, ausgehend auch von der Positionierung der empfindlichen Ausrüstung, um die Parameter des Gesetzes zu beeinflussen, welches die Amplituden von vorübergehenden Störungen steuert, und unter Berücksichtigung des zumindest einen Parameters, um die Parameter des statistischen Gesetzes der Verteilung zu beeinflussen, das die Zeitintervalle steuert, die zwei vorübergehende Ereignisse voneinander trennen, wobei das Szenario von elektromagnetischen Störungen auch eine Menge von permanenten Störungen umfasst,
wobei das Verfahren darüber hinaus **dadurch gekennzeichnet ist, dass** es Schritte beinhaltet, die aus dem Programmieren eines Signalgenerators mit dem Szenario von elektromagnetischen Störungen und dem Senden eines Signals entsprechend dem Szenario von elektromagnetischen Störungen mithilfe des Signalgenerators an die empfindliche Ausrüstung als Destination bestehen.

2. Verfahren nach Anspruch 1, **dadurch gekennzeichnet, dass** es einen Schritt umfasst, der aus dem Festlegen zumindest einer Eigenschaft besteht, die sich auf die Eingangsstufe der empfindlichen Ausrüstung bezieht, wobei die zumindest eine Eigenschaft berücksichtigt wird, um das Szenario von elektromagnetischen Störungen zu erzeugen.

3. Signalgenerator, der mit einem Szenario von elektromagnetischen Störungen programmiert ist, das durch die Ausführung eines Verfahrens zur Erzeugung eines Szenarios von elektromagnetischen Störungen für die Überprüfung der Zuverlässigkeit einer empfindlichen Ausrüstung erhalten wird, umfassend die Schritte bestehend aus:

- Definieren (102) von elektromagnetischen Umgebungsbedingungen, die sich auf die Umgebung der empfindlichen Ausrüstung beziehen, und
- Erzeugen eines Szenarios von elektromagnetischen Störungen, das eine Menge von vorübergehenden Störungen umfasst, ausgehend von den elektromagnetischen Umgebungsbedingungen,

**dadurch gekennzeichnet, dass** die Umgebung ein Zug ist und dass das Verfahren die Schritte beinhaltet, die bestehen aus:

- Durchführen von vorläufigen Messungen von elektromagnetischen Störungen in variierenden Umgebungen und Speichern von Daten, die sich auf diese Messungen beziehen,
- Analysieren der Dauern, der Anstiegszeiten und der Wiederholraten der in dem vorhergehenden Schritt gespeicherten Daten, um daraus statistische Gesetze der Verteilung von kennzeichnenden Parametern der elektromagnetischen Störungen zu extrahieren, in Abhängigkeit von den Messbedingungen, und Speichern der statistischen Gesetze der Verteilung in einer Datenbank,
- Bestimmen (103) einer Positionierung der empfindlichen Ausrüstung in der Umgebung,
- Festlegen zumindest eines Parameters aus der maximalen Geschwindigkeit, dem Typ der Elektrifizierung der Linie oder dem Alter der Oberleitung,
- Erzeugen (104) des Szenarios von elektromagnetischen Störungen unter Verwendung der Datenbank, ausgehend auch von der Positionierung der empfindlichen Ausrüstung, um die Parameter des Gesetzes zu beeinflussen, welches die Amplituden von vorübergehenden Störungen steuert, und unter Berücksichtigung des zumindest einen Parameters, um die Parameter des statistischen Gesetzes der Verteilung zu beeinflussen, das die Zeitintervalle steuert, die zwei vorübergehende Ereignisse voneinander trennen, wobei das Szenario von elektromagnetischen Störungen auch eine Menge von permanenten Störungen umfasst,

wobei der Signalgenerator ein Signal, das dem Szenario von elektromagnetischen Störungen entspricht, an die empfindliche Ausrüstung als Destination aussendet.

4. Signalgenerator nach Anspruch 3, **dadurch gekennzeichnet, dass** er mit einem Szenario von elektromagnetischen Störungen programmiert ist, das durch die Ausführung eines Verfahrens zur Erzeugung eines Szenarios von elektromagnetischen Störungen erhalten wird, welches einen Schritt umfasst, der aus dem Festlegen zumindest einer Eigenschaft besteht, die sich auf die Eingangsstufe der empfindlichen Ausrüstung bezieht, wobei die zumindest eine Eigenschaft berücksichtigt wird, um das Szenario von elektromagnetischen Störungen zu erzeugen.

**Claims**

1. A method for generating an electromagnetic noise scenario for the monitoring of the reliability of sensitive equipment, comprising the steps of:

    - defining (102) environmental electromagnetic conditions relating to the environment of the sensitive equipment, and
    - generating, from said environmental electromagnetic conditions, an electromagnetic noise scenario comprising a set of transient noises,

    **characterized in that** said environment is a train and **in that** the method includes steps consisting of:

    - making preliminary measurements of electromagnetic noises in various environments and storing data relating to these measurements,
    - analyzing the durations, the rise times and the repetition rate of the data stored in the previous step to extract therefrom statistical laws of distribution of the parameters characteristic of the electromagnetic noises, based on the measurement conditions, and storing the statistical distribution laws in a database,
    - determining (103) a positioning of the sensitive equipment in said environment,
    - setting at least one parameter among the maximum speed, the type of electrification of the line or the age of the catenary,
    - by using the database, generating (104) said electromagnetic noise scenario also from said positioning of the sensitive equipment, to impact the parameters of the law that controls the amplitudes of the transient noises, and by taking into account said at least one parameter to impact the parameters of the statistical distribution law that controls the time intervals separating two transient events, said electromagnetic noise scenario also comprising a set of permanent noises,

the method being further **characterized in that** it includes steps consisting of programming a signal generator with said electromagnetic noise scenario, and of emitting, using said signal generator, a signal corresponding to said electromagnetic noise scenario destined for said sensitive equipment.

2. The method according to claim 1, **characterized in that** it comprises a step consisting of setting at least one characteristic relating to the input stage of said sensitive equipment, said at least one characteristic being taken into account to generate said electromagnetic noise scenario.

3. A signal generator programmed with an electromagnetic noise scenario obtained by the execution of a method for generating an electromagnetic noise scenario for the monitoring of the reliability of sensitive equipment, comprising the steps consisting of:

    - defining (102) environmental electromagnetic conditions relating to the environment of the sensitive equipment, and
    - generating, from said environmental electromagnetic conditions, an electromagnetic noise scenario comprising a set of transient noises,

    **characterized in that** said environment is a train and **in that** the method includes steps consisting of:

    - making preliminary measurements of electromagnetic noises in various environments and storing data relating to these measurements;
    - analyzing the durations, the rise times and the repetition rate of the data stored in the previous step to extract therefrom statistical laws of distribution of the parameters characteristic of the electromagnetic noises, based on the measurement conditions, and storing the statistical distribution laws in a database,
    - determining (103) a positioning of the sensitive equipment in said environment,
    - setting at least one parameter among the maximum speed, the type of electrification of the line or the age of the catenary,
    - by using the database, generating (104) said electromagnetic noise scenario also from said positioning of the sensitive equipment, to impact the parameters of the law that controls the amplitudes of the transient noises, and by taking into account said at least one parameter to impact the parameters of the statistical distribution law that controls the time intervals separating two transient events, said electromagnetic noise scenario also comprising a set of permanent noises;

the signal generator emitting a signal corresponding to said electromagnetic noise scenario destined for said sensitive equipment.

4. The signal generator according to claim 3, **characterized in that** it is programmed with an electromagnetic noise scenario obtained by the execution of a method for generating an electromagnetic noise scenario which comprises a step consisting of setting at least one characteristic relating to the input stage of said sensitive equipment, said at least one characteristic being taken into account to generate said electromagnetic noise scenario.

| Mesures | ~100 |

| Extraction de lois de distribution | ~101 |

| Définition de l'environnement | ~102 |

| Définition de l'équipement | ~103 |

| Génération d'un scénario de bruits électromagnétiques | ~104 |

| Contrôle de la fiabilité de l'équipement | ~105 |

FIG.1

FIG.2

FIG.3

FIG.4

FIG.5

TGV ▨  TER ☐  FRET ☐

Longueur du trajet [＿＿]  Vitesse commerciale [＿＿]

Nombre de gare traversées [＿＿]

Distance en zone rurale [＿＿]    Distance en zone urbaine [＿＿]

Type de locomotive [＿＿]    Age de la locomotive [＿＿]

**FIG.6**

Dispositif de télécommunication ▨    Dispositif électronique ☐

GSM-R
WIFI
Radio sol train
TNT
...

**FIG.7**

Type d'antenne

Omidirectional-double band 440-470MHz&870-960MHz
Omidirectional-band 870-960MHz
...
Autre antenne

Distance antenne-pantographe [＿＿]

**FIG.8**

Coefficient de modulation d'amplitude

_ _ _ _ Un canal GSM lien descendant-925MHz
――― Plusieurs canaux TV
········· Emetteur radio 107.7MHz

Ville de départ        Ville d'arrivée        **FIG.13**

FIG.9

FIG.10

FIG.11

FIG.12

Fig.14  Fig.15  Fig.16  Fig.17

Fig.18  Fig.19  Fig.20  Fig.21

Fig.22  Fig.23  Fig.24  Fig.25

Fig.26  Fig.27  Fig.28  Fig.29

**EP 2 308 192 B1**

## RÉFÉRENCES CITÉES DANS LA DESCRIPTION

**Documents brevets cités dans la description**

- US 20070127559 A
- US 5794128 A
- WO 2002009313 A
- FR 2877514